# EUROPEAN PATENT APPLICATION

(11) **EP 0 987 271 A1**
(43) Date of publication of application: **22.03.2000**
(21) Application number: 99307299.0
(22) Date of filing: 14.09.1999
(51) Int. Cl.: C07F 15/00, C07B 53/00, B01J 31/24, C07F 9/59, C07F 9/572, C07B 57/00

(54) **An optically active diaminophosphine ligand-transition metal complex**

(30) Priority: 14.09.1998 JP 25980198
(71) Applicant: Ajinomoto Co., Inc., Tokyo 104 (JP)
(72) Inventor: Hamada, Takayuki, Kawasaki-ku, Kawasaki-shi, Kanagawa (JP); Izawa, Kunisuke, Kawasaki-ku, Kawasaki-shi, Kanagawa (JP)
(74) Representative: Nicholls, Kathryn Margaret

(57) **Abstract**

There are disclosed herein an optical resolution of racemic 2, 2'-bipiperidine into its optically active components using an optically active carboxylic acid as a resolving agent; optically active N,N'-bis(diphosphino)- 2,2'-bipiperidine and an optically active N,N'-bis(diphosphino)-2,2'-bipyrrolidine derived from an optically active 2,2'-bipiperidine and an optically active 2,2'-bipyrrolidine, respectively, are disclosed and may be used to prepare a transition metal complex wherein one of these chiral diaminophosphines constitutes a ligand. Said transition metal complex is useful as a catalyst for asymmetric reaction of unsaturated organic compounds. The complex exerts excellent catalytic activity for the asymmetric reduction and its synthesis may be accomplished under mild conditions. The transition metal complex and its synthetic intermediates may be prepared by a simple and convenient process.

## Description

The present invention relates to an optically active diaminophosphine ligand - transition metal complex which is useful as a catalyst for asymmetric reactions of unsaturated organic compounds, and to said optically active diaminophosphine ligand, and further to a process for preparing said ligand and its synthetic intermediate and to an asymmetric reaction of an unsaturated organic compound by using said complex as a catalyst.

Asymmetric synthesis by use of a diamine ligand has been investigated intensively during recent years. For example, there were reported asymmetric reduction by use of diaminocyclohexane (K. Okuno et al.; Bull. Chem. Soc. Jpn., 1980, p.2016), asymmetric aldol condensation by use of 1,2-diphenylenediamine (E. J. Corey et al.; J. Am. Chem. Soc., 1989, 111, p. 5493), and asymmetric deprotonation by use of (-)-sparteine (S. T. Kerrick and P. Beak; J. Am. Chem. Soc., 1991,113, p. 9708), and diamine ligands have been expected to be utilizable for the asymmetric synthesis as above-stated.

Recently there are also reported many examples of asymmetric reactions of unsaturated organic compounds using transition metal-chiral phosphine catalysts (R. Noyori, "ASYMMETRIC CATALYSIS IN ORGANIC SYNTHESIS", published by John Wiley & Sons Inc. in 1994). This literature discloses on p. 18-19 preparation examples of an optically active N-acetyl phenylalanine by asymmetric reduction of N-acetyl dehydrophenylalanine using some rhodium - chiral phosphine catalysts.

Furthermore, there are reported in the same reference examples of asymmetric isomerisation of olefins (p95-119) asymmetric hydrosilylation of unsaturated organic compounds (p124-131), aldehyde formation by asymmetric hydroformylation of olefins (p162-167), formation of esters or carboxylic acids by asymmetric Heck reaction of olefins (p191-192).

Among transition metal-chiral phosphine catalysts, the BINAP ligand, in particular, has been widely utilized as an asymmetric catalyst owing to its characteristic chemical structure with a steady face-edge system.

The following shows a synthetic route to BINAP which is the representative phosphine ligand.

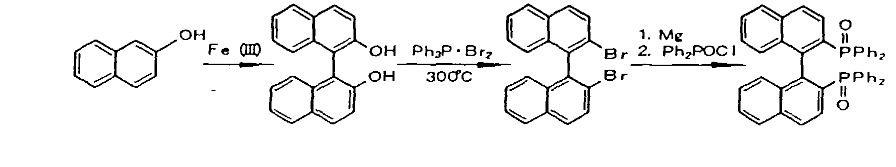

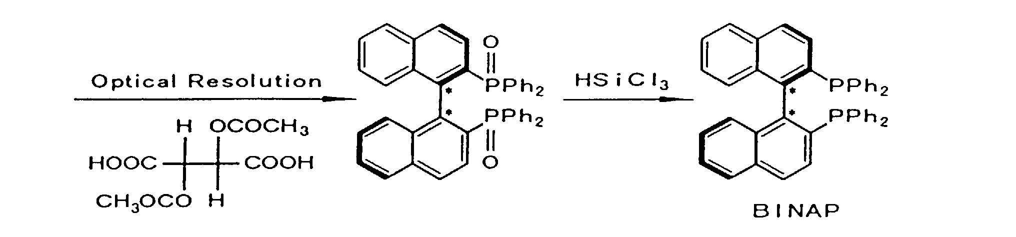

In the BINAP synthesis shown above, a high temperature of 300°C is required for the bromination of the alcohol and special equipment is necessary because of evolution of hydrogen bromide. Furthermore, an expensive silicon reagent (HSiCl₃) is required for the reduction of the phosphine oxide and causes increase in the production cost. Therefore the BINAP synthesis is not necessarily suitable to be carried out on an industrial scale.

The present inventors appreciated the desirability of a novel catalyst which would display asymmetric catalytic activities to the same extent as BINAP catalyst.

They also understood the desirability of a ligand which might be utilized in an asymmetric catalyst and which might be synthesized under mild condition with consequent low production cost.

Further, they realised it was preferable that the ligand and asymmetric catalyst prepared therefrom be obtainable by a simple and convenient process.

As a result of having ardently studied, the present inventors have found that there can be obtained a satisfactory asymmetric catalyst by using an optically active specific diaminophosphine ligand having bipiperidine or bipyrrolidine structure and have further found that the synthesis of said ligand may be accomplished under mild condition with result that the ligand can be obtained cheaply in a simple and convenient manner. The present invention has been completed based on the above findings.

That is, the present invention includes the following subject matters:

An optically active diaminophosphine ligand - transition metal complex which may be represented by the following general formula (I) or (II) 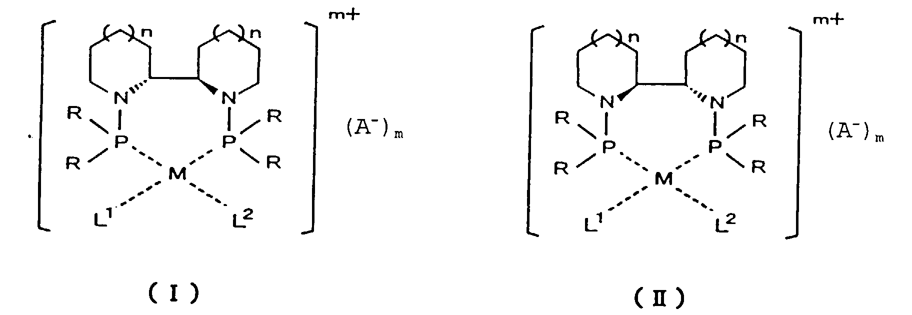 wherein R represents an optionally substituted aryl group or an optionally substituted cycloalkyl group having 3-8 carbon atoms, n represents an integer of 0 or 1, M represents a transition metal, A- represents a counter ion, m represents an integer from 0-4, and L¹ and L² represent a ligand independently or in one united body.

An optically active diaminophosphine derivative which may be represented by the following general formula (III) or (IV) 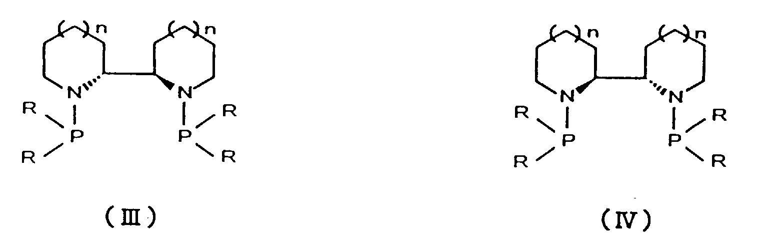 wherein R represents an optionally substituted aryl group or an optionally substituted cycloalkyl group having 3-8 carbon atoms and n represents an integer of 0 or 1.

A process for preparing an optically active diaminophosphine derivative represented by the above general formula (III) or (IV) which comprises reacting an optically active compound which may be represented by the general formula (V) or (VI) as shown below with a halophosphine which may be represented by the general formula (VI) as shown below. 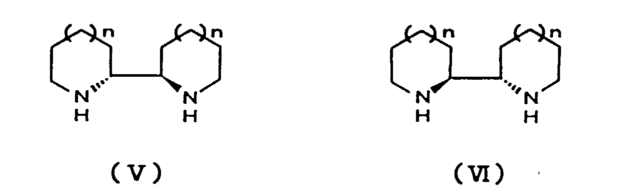 wherein n represents an integer of 0 or 1 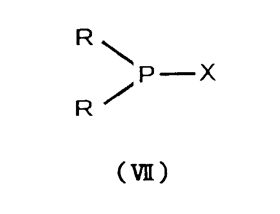 wherein R represents an optionally substituted aryl group or an optionally substituted cycloalkyl group having 3-8 carbon atoms and X represents a halogen atom.

A process for preparing an optically active 2, 2'-bipiperidine which may be represented by the formula (VIII) or (IX) as shown below which comprises resolving racemate consisting of (S,S)- and (R,R)-2, 2'-bipiperidine (VIII) and (IX) with an optically active carboxylic acid.

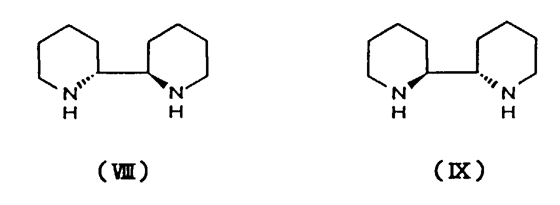

An asymmetric process of reduction, hydrosilylation or other process of an unsaturated organic compound which comprises using as an asymmetric catalyst the optically active diaminophosphine ligand - transition metal complex.

A process for preparing an optically active amino acid derivative which may be represented by the general formula (X I ) as shown below which comprises subjecting a dehydroamino acid derivative represented by the general formula (X ) as shown below to asymmetric reduction in the presence of an optically active diaminophosphine ligand-transition metal complex represented by the above general formula (I) or (II) 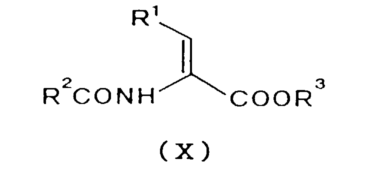 wherein R¹ represents hydrogen atom, an optionally substituted alkyl group, an optionally substituted aryl group or an optionally substituted aralkyl group, R² represents an optionally substituted lower alkyl group or an optionally substituted phenyl group and R³ represents either OR⁴ or NH₂, and R⁴ in OR⁴ represents hydrogen atom, sodium atom, an optionally substituted lower alkyl or an optionally substituted aryl group. 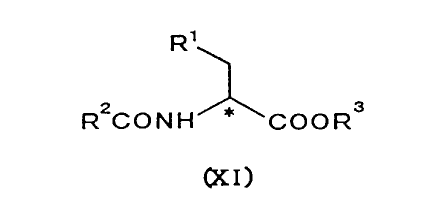 wherein each of R¹, R² and R³ has the same meaning as above.

The followings illustrates the present invention in detail.

In the general formula (I) and (II), R represents an optionally substituted aryl group or an optionally substituted cycloalkyl group having 3-8 carbon atoms.

Examples of an optionally substituted aryl group include tolyl, o-methoxyphenyl, m-methoxyphenyl, p-methoxyphenyl, 3,5 - dimethyl - 4 - methoxyphenyl and phenyl.

### Examples of an optionally substituted cycloalkyl group having 3-8 carbon atoms include cyclopentyl and cyclohexyl.

As to the substituent, it is not restricted particularly so long as it does not affect adversely on the effect of the present invention. Examples of such substituent include lower alkyl group having from 1 to 4 carbon atoms such as methyl and ethyl, lower alkoxyl group having from 1 to 4 carbon atoms such as methoxyl and ethoxyl, halogen atom such as chlorine and sulphonic acid residue.

As R, phenyl, tolyl and cyclohexyl groups are preferable. However, phenyl and cyclohexyl groups are more preferable and phenyl group is the most preferable.

In the optically active diaminophosphine ligand-transition metal complex represented by the above general formula (I) or (II), the four R substituents may be different each other but it is preferable that all of them are identical from the aspect of supressing the formation of undesirable isomer to minimum during the asymmetric reaction.

In the general formulae (I) and (II), n represents an integer 0 or 1. In the case where n is 0, they indicate compounds having pyrrolidine structure as shown by the formulae (I)-a and (II)-a while in the case where n is 1, they indicate compounds having piperidine structure as shown by the formulae (I)-b and (II)-b.

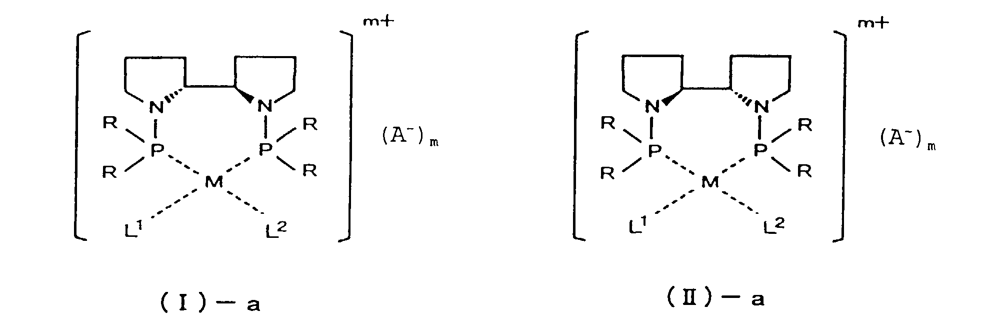

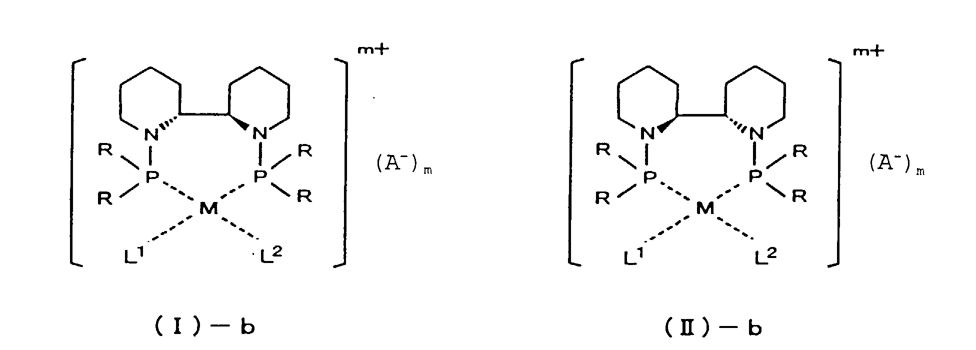

In the general formulae (I) and (II), M represents a transition metal. Preferable examples of the transition metal include rhodium, ruthenium, palladium, iridium and the like. Rhodium and ruthenium are preferable for the asymmetric reduction or asymmetric hydrosilylation of unsaturated organic compounds or the asymmetric isomerisation of olefins.

In the general formulae (I) and (II), m represents an integer of 0-4, A⁻ represents a partner ion. Preferable examples of the partner ion include Cl⁻, Br⁻, F⁻, I⁻, ClO₄⁻, PF₆⁻, BF₄⁻ and the like.

In the general formulae (I) and (II), L¹ and L² represent a ligand independently or in one united body. As the ligand, there may be used any one which is capable of being coordinated to a transition metal. Preferable examples of the ligand include halogen such as chlorine and bromine; carboxylate compounds having 2-10 carbon atoms such as acetate, propionate and itaconate ions; alcohol compounds having 1-10 carbon atoms such as methanol and ethanol; an aromatic compound having 5-10 carbon atoms such as benzene; cycloalkyl diene having 5-20 carbon atoms or alkyl diene having 5-20 carbon atoms such as 1,5-cyclooctadiene and norbonadiene, amine compounds including diamines and amiiiophosphines such as BINAP and an optically active aminophosphine which may be represented by the general formula (III) or (IV) in the present invention. These ligands may be further substituted by a substituent. As to the substituent, it is not restricted particularly so long as it does not affect adversely on the effect of the present invention. Examples of such substituent include lower alkyl group having 1-4 carbon atoms such as methyl and ethyl, and lower alkoxyl group having 1-4 carbon atoms such as methoxyl and ethoxyl.

The optically active diaminophosphine ligand - transition metal complex represented by the general formula (I) or (II) may be easily prepared from an optically active aminophosphine (III) or (IV) and a transition metal by the process which itself was known to a person having ordinary skill in the art.

Its preparation is illustrated by way of example with the case where a transition metal is monovalent one and a ligand L is a diene compound as follows:

If a transition metal, ligand (an optically active diaminophosphine), a partner ion, a diene compound and a halogen are represented by M, ligand, A, diene and X, respectively, the transition metal complex of the present invention may be represented by [M (ligand) (diene)] ⁺A⁻ and it may be prepared by the following reaction:

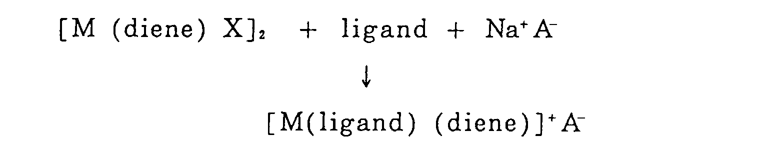

An optically active diaminophosphine is reacted with a transition metal diene complex in a solvent such as dichloromethane, benzene, toluene, methanol, ethanol, isopropanol, tetrahydrofuran, acetone or mixture thereof thereby the desired complex is formed. The reaction temperature may be 0-50 °C, preferably 20-30 °C and the reaction time may be in the range of from 3 minutes to 1 hour, preferably from 5 to 10 minutes. After completion of the reaction, crystals of an optically active diaminophosphine- metal complex may be obtained by crystallization with one or more of solvents such as acetone, dichloromethane, diethylether, ethyl acetate, benzene or toluene.

The crystal obtained thus may be identified by X-ray analysis.

If its preparation example is taken, [M (diene) X]₂ (1. 0 equivalent weight) and Na⁺A⁻ (1.4 mole equivalent) are dissolved in a solvent such as acetone and to the solution is added a ligand ( 1.4 mole equivalent). And then the resultant mixture is stirred at room temperature for 5-10 minutes and followed by the addition of solvent such as dichloromethane. The formed inorganic salt is removed by filtration and the filtrate is concentrated until its volume is reduced by about 20% and allowed to stand in an atmosphere of inert gas such as argon. The crystals precipitate and are filtered out thereby there may be obtained the desired complex crystals.

An optically active aminophosphine (III) or (IV) may be prepared by reacting an optically active diamine (V ) or (VI) with a halophosphine (VII) in a solvent such as toluene, dichloromethane or diethyl ether in the presence of a base such as triethylamine. The reaction temperature may be 0-50 °C, preferably 20-30 °C and the reaction time may be in the range of from 30 minutes to 5 hours, preferably from 1 to 2 hours. After removal of the solvent from the reaction mixture by distillation under reduced pressure, the solid material obtained is dissolved in a good solvent such as acetone and to the solution a crystallization solvent such as water is added dropwise thereupon the desired aminophosphine crystallizes out. If necessary, it may be purified by recrystalization.

Examples of a halophosphine include chlorodiphenylphosphine, chlorodicyclohexylphosphine, chlorocyclohexylphenylphosphine, chloroditorylphosphine, chlorodi(omethoxyphenyl)-phosphine, chlorodi(m-methoxyphenyl) phosphine, chlorodi(p-methoxyphenyl)phosphine, chlorodi(3,5-dimethyl - 4 - methoxyphenyl)phosphine and the like.

The halophosphine may be used in amount of 2.2-2.4 mole equivalent per mole equivalent of the optically active diamine.

As a crystallization solvent, there may be taken water, methanol, ethanol, isopropanol, n-propanol, diethylether, petroleum ether, tetrahydrofuran, methyl tert-butyl ether, methyl isobutyl ketone, acetone, cyclohexane, hexane, ethyl acetate, benzene, toluene, pentane, dichloromethane, chloroform, acetonitrile, dioxane and mixture thereof.

Next, a process is illustrated for preparing an optically active diaminophosphine (V) or (VI).

A compound represented by the general formula (V ) or (VI) where n is 1, that is, an optically active 2, 2'-bipiperidine may be prepared by optical resolution of racemic 2, 2'-bipiperidine consisting of optically active 2, 2'-bipiperidine (VIII) and (IX) with an optically active carboxylic acid as a resolving agent.

More specifically, an optically active 2, 2'-bipiperidine represented by the formula (VIII) or (IX) may be prepared by a process which comprises reacting racemic 2, 2'-bipiperidine with an optically active carboxylic acid in a solvent to form two diastereomeric salts, separating the less soluble of diastereomeric salt by fractional crystallization utilyzing the difference in solubility between the two diastereomeric salts and decomposing the separated diastereomeric salt with an alkali.

It is known that the optically active 2, 2'-bipiperidine is synthesized by converting racemic 2, 2'-bipiperidine into its cobalt complex and resolving the cobalt complex with camphor sulfonic acid derivative (M. Sato, Y. Sato and S. Yoshikawa; J. CHEM. SOC. DALTON TRANS, 1985, p. 895-8). However, this known process is not suitable for the industrial production because of necessity of formation and decomposition reactions of the cobalt complex and because of including many production steps.

2, 2'-Bipiperidine may be synthesized by reducing 2, 2'-piperidine with hydrogen gas in the presence of a metal catalyst. Examples of the metal catalyst include platinum oxide, palladium, ruthenium and rhodium. The reaction may be carried out under the hydrogen pressure of 10-1300 KPa. There may also be applied pyridine ring nuclear reduction using potassium hydroxide and nickel-aluminum alloy.

Thus obtained 2, 2'-bipiperidine is recrysllized in the form of hydrochloride, thereby meso and racemic forms are separated out, and the racemic form of 2,2'-bipiperidine is subjected to optical resolution. As a resolving agent which may be used in the optical resolution of 2, 2'-bipiperidine, there may be taken optically active carboxylic acids such as (+) and (-)- tartaric acid, (+) and (-)-malic acid, (+) and (-)-10-camphor sulfonic acid, (+) and (-)-pyroglutamic acid, (+) and (-)-aspartic acid, (+) and (-)-phenylethanesulfonic acid, (+) and (-)-mandelic acid, (+) and (-)-cis-2-benzamidecyclohexane carboxylic acid and the like. (+) and (-)-tartaric acid are the most preferable. As to the amount of optically active carboxylic acid resolving agent used, 0.5-2.0 mole equivalent per equivalent weight of racemic 2, 2'-bipiperidine is preferred.

The resolution is conducted in a solvent. As the solvent, there may be taken water, methanol, ethanol, isopropanol, n-propanol, diethylether, petroleum ether, tetrahydrofuran, methyl tert-butyl ether, methyl isobutyl ketone, acetone, cyclohexane, hexane, ethyl acetate, benzene, toluene, pentane, dichloromethane, chloroform, acetonitrile, dioxane and mixture thereof.

The resolution may be illustrated by an example, in which the optically active carboxylic acid is tartaric acid.

When L-tartaric acid is employed as the resolving agent to racemic 2, 2'-bipiperidine, the (R, R) form of optically active 2, 2'-bipiperidine L-tartrate crystallizes out selectively while when D-tartaric acid is used, the (S, S) form of optically active 2, 2'-bipiperidine D-tartrate crystallizes out. The crystallized optically active 2, 2'-bipiperidine tartrate is filtered out and decomposed with an alkali such as aqueous sodium hydroxide solution to liberate the desired optically active 2, 2'-bipiperidine and optically active tartaric acid resolving agent. The optically active 2, 2'-bipiperidine is obtained, for example, by extracting with an appropriate organic solvent such as dichloromethane. In this case, the temperature at which an aqueous solution of tartaric acid is added to a solution of racemic 2,2'-bipiperidine dissolved in an organic solvent may be one ranging from the room temperature to 80 °C, preferably 50-60 °C. And, it is recommendable that the mixture ratio of the organic solvent to water in volume and the amount of the mixed solvent be controlled to such extent that the system does not became white turbid.

Also, as to a compound represented by the general formula (V) or (VI) where n is 0, that is, an optically active 2, 2'-bipyrrolidine which may be represented by the formula (X II) or (X III), [T. Oishi, M. Hirama, L. R. Site and S. Masamune; SYNTHESIS, p. 789 (1991)], for example, discloses a synthetic method and an optical resolution method for which optically active tartaric acid is used.

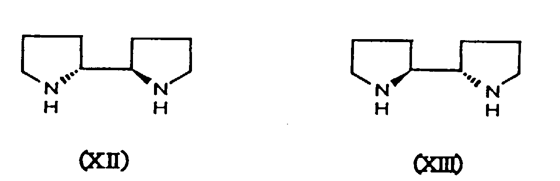

The optically active diaminophosphine ligand - transition metal complexes (I) and (II) obtained thus are expected to be widely applicable as asymmetric catalysts in organic synthesis like the asymmetric catalysts which are disclosed in R. Noyori, "ASYMMETRIC CATALYSIS IN ORGANIC SYNTHESIS", published by John Wiley & Sons Inc. in 1994.

That is, they are useful as catalysts for asymmetric reactions of an unsaturated organic compound having an unsaturated bond such as an olefinic bond (C=C), a ketone bond (C=O) or an imine bond (C=N).

They may be used gene=ally in the manner disclosed in said book, e.g. for asymmetric reduction (pages 16-94), asymmetric isomerisation of olefins (pages 95-119), asymmetric hydrosilylation (pages 124-131), asymmetric hydroformylation to form aldehydes (pages 162-167), asymmetric hydrocarboxylation to form esters or carboxylic acids (pages 167-169) and the asymmetric Heck reaction of olefins (pages 191-192). The person skilled in the art can select suitable reaction conditions for a particular reaction on the basis of said literature and background skill and knowledge.

For example, asymmetric hydrosilylation of an unsaturated organic compound by use of the optically active diaminophosphine ligand-transition metal complex catalyst may be conducted in the presence of a silylating agent (R. Noyori, "ASYMMETRIC CATALYSIS IN ORGANIC SYNTHESIS", p.124-131, published by John Wiley & Sons Inc. in 1994).

As silylating agent, there may be taken ones represented by the general formulae as shown below. 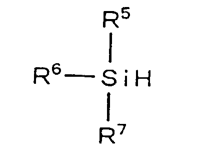 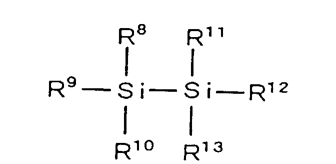 wherein each of R⁵-R¹³ represents hydrogen -atom, a halogen atom, an optionally substituted alkyl group or an optionally substituted aryl group.

As halogen atom, Cl is preferable. A lower alkyl group having 1-4 carbon atoms is preferable as optionally substituted alkyl group, and phenyl and naphthyl groups are preferable as optionally substituted aryl group.

As to the substituent, it is not restricted particularly so long as it does not affect adversely on the effect of the present invention. Examples of such substituent include lower alkyl group such as methyl and ethyl, lower alkoxyl group such as methoxyl and ethoxyl, halogen atom such as chlorine and the like.

The obtained hydrosilylated compound may be hydrolyzed to give a compound wherein silyl group has been replaced by hydrogen (R. Noyori, "ASYMMETRIC CATALYSIS IN ORGANIC SYNTHESIS", p. 124-131, published by John Wiley & Sons Inc. in 1994).

For example, for aldehyde formation by asymmetric hydroformylation of olefins, an organic compound with an olefinic bond may be reacted with hydrogen and carbon monoxide using the catalyst of the present invention generally as disclosed by Noyori (pages 162-167). Asymmetric hydrocarboxylation of olefins can employ carbon monoxide and alcohol or water, using the catalyst of the present invention, generally as disclosed by Noxori (pages 167-169).

The usefulness of the transition metal complex involved in the present invention is illustrated with an example of its application as a catalyst for an asymmetric reduction of a dehydroamino acid as shown by the following scheme.

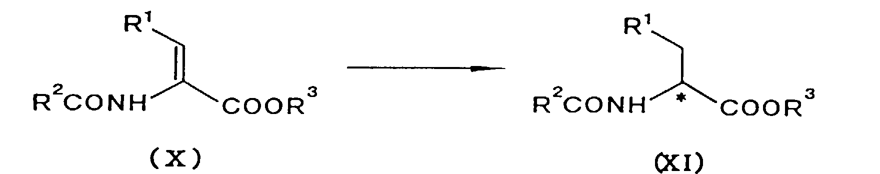

In the general formulae (X) and (XI), R¹ represents hydrogen atom, an optionally substituted alkyl group, an optionally substituted aryl group or an optionally substituted aralkyl group, R² represents an optionally substituted lower alkyl group or an optionally substituted phenyl group and R³ represents either OR⁴ or NH₂, and R⁴ in OR⁴ represents hydrogen atom, sodium atom, an optionally substituted lower alkyl group or an optionally substituted aryl group.

As example of R¹, there may be taken hydrogen atom, alkyl group having 1-10 carbon atoms, aryl group havig 6-15 carbon atom or aralkyl group having 7-20 carbon atoms may be taken.

As example of R², there may be taken alkyl group having 1-4 carbon atoms or phenyl group.

As example of R⁴, there may be taken hydrogen atom, sodium atom, lower alkyl group having 1-4 carbon atoms or aryl group having 6-16 carbon atoms.

As examples of substituent, there may be taken alkoxyl group, nitro group, alkyl group and halogen atom and the like.

Specific examples of a dehydroamino acid include N-acetyldehydrophenylalanine, N-acetyldehydroalanine, N-acetyldehydro-p-chlorophenylalanine and the like.

The asymmetric reduction of dehydroamino acid may be carried out in a solvent under hydrogen pressure of 1-100 atm., preferably more than 8 atm. in an autoclave. Examples of the solvent include alcohols such as methanol, ethanol, isopropanol and n-propanol; chloroform, dichloromethane, benzene, toluene, tetrahydrofuran and mixture thereof. The amount of substrate (dehydroamino acid) based on catalyst may be in the range of 10-10,000 times mole. The reaction temperature may be 15-100 °C, preferably 20-50 °C and the reaction time may be 3-168 hours.

For example, when the asymmetric hydrogenation of N-acetyldehydro-phenylalanine has been conducted in the presence of an optically active N, N'-bis(diphenylphosphin o)-(R, R)-2,2'-bipyrrolidine rhodium complex, N-acetylphenylalanine may be obtained in a quantitative yield with 96.5% ee of optical purity. This value exceeds greatly 84% ee which is the result obtained when asymmetric hydrogenation of N-acetyldehydrophenylalanine has been conducted in the presence of rhodium-BINAP complex (A. Miyashita, A. Yasuda, H. Takaya, K. Toriumi, T. Souchi and R. Noyori; J. Am. Chem. Soc., 1980, 102, p. 7932) and thus the optically active N,N'-bis(diphenylphosphino)-(R, R)-2,2'-bipyrrolidine rhodium complex was confirmed to have an excellent asymmetric reduction catalytic ability.

The following Referential Examples and Examples illustrate the present invention more specifically. Needless to say, the present invention is not restricted thereto.

A process for synthesizing a series of (R, R) form of related compounds is illustrated herein. It is to be understood that a synthesis of (S, S) form of related compounds may be accomplished according to that of (R, R) form of compounds using D-tartaric acid in place of L-tartaric acid.

### Referential Example 1: synthesis of 2, 2'-bipiperidine

A suspension of 2,2'-bipiperidyl (a product of Aldrich Chemical Company, Inc., 3.00 mg, 19.2 mmol) and platinum oxide (a product of Kawaken Fine Chemical Co., Ltd., 600 mg, 1.76 mmol) in tetrahydrofuran (50 ml) was set in an autoclave and stirred for 16 hours at 100°C under hydrogen pressure of 120 atm. After completion of the reaction, the reaction mixture was filtered and the filtrate was concentrated under reduced pressure to remove the solvent. The residue was dried under vaccum to obtain a colorless liquid (3.22 g, 100%).
¹H-NMR (CDCl₃) d=1.00-1.45 (m, 6H), 1.51- 1.84 (m, 8H), 2.21-2.29 (m, 1H), 2.37-2.40 (m, 1H), 2.52-2.57 (m, 2H), 3.04-3.10 (m, 2H)
¹³C-NMR (CDCl₃) d= 24.73, 24.82, 26.61. 26.95. 28.19, 29.23, 46.92, 47.62, 61.54, 61.85
MS (ESI) MH⁺ = 169. 2

| | | | |
|---|---|---|---|
| HRMS (FAB) | Calculated [for C₁₀H₂₁N₂(MH⁺)] | 169. | 1705 |
| | Found | 169. | 1706 |

### Referential Example 1: synthesis of racemic 2, 2'-bipiperidine

Concentrated hydrochloric acid was added to 2, 2'-bipiperidine (11.13 g, 66.15 mmol) to reach a pH of about 2. After evaporation of the solvent under reducrd pressure, the resultant residue was dried under vaccum to obtain white solid material. This solid material was ground into powders in a mortar and dissolved in ethanol (96 ml) by heating under reflux, and the solution was allowed to stand overnight. Plate crystals precipitated, were filtered out and dried. The NMR and HPLC measurenents proved to be meso form (5.03 g, yield of 63%, purity of 100%).

Also, upon standing the filtrate at room temperature crystals precipitated, were filtered out and dried. The NMR and HPLC measurenents proved to be racemic form (3.42 g, yield of 43%, purity of 100%).
¹H-NMR (CDCl₃) d= 1.01-1.43 (m, 6H), 1.52-1.74 (m, 8H), 2.21-2.29 (m, 1H), 2.22-2.30 (m, 1H), 2.52-2.61 (m, 2H), 3.04-3.10 (m, 2H)
¹³C-NMR (CDCl₃) d=24.63, 26.82, 29.12. 46.81. 61.43
MS (ESI) MH⁺=169. 2

| | | | |
|---|---|---|---|
| HRMS (FAB) | Calculated [for C₁₀H₂₁N₂(MH⁺)] | 169. | 1705 |
| | Found | 169. | 1698 |

### Example 1: synthesis of (R, R)-2, 2'-bipiperidine L-tartrate

To a methanol solution (8.0 ml) of racemic 2, 2'-bipiperidine (2.918 g, 17.34 mmol) at 60°C was added an aqueous solution (2.6 ml) of L-tartaric acid (2.60 g, 17.34 mmol). And methanol (24 ml) was further added thereto. After stirring for 10 minutes at 60 °C, the mixted solution was allowed to stand at room temperature. White crystals precipitated, were filterd out and dried under vaccum to obtain white solid material (1.96 g, 71.2%). They were recrystallized from a mixed solvent of methanol (40 ml) and water (2.1 ml) to obtain white crystals having a melting point of 168-170°C (1.44 g, 53.9 % yield).
¹H-NMR (D₂O) d= 1.80-1.90 (m, 2H), 1.99-2.16 (m, 4H), 2.29-2.38 (m, 1H), 3.42-3.47 (m, 4H), 3.85-3.90 (m, 2H), 4.52 (d, 4H)
¹³C-NMR (D₂O) d=29.74, 35.31, 53.48. 67.53. 79.95, 183.59
MS (ESI) MH⁺ =169. 2

| Elementary analysis | C | H | N |
|---|---|---|---|
| Calculated for C₁₄H₂₆N₂O₆ (%) | 52.8 | 8.2 | 8.8 |
| Found (%) | 52.9 | 8.2 | 8.9 |

### Example 2: synthesis of (R, R)-2,2'-bipiperidine

To (R, R)-2, 2'-bipiperidine L-tartrate (1.395 g, 4.38 mmol) were added 2 N of aqueous sodium hydroxide solution (8. 0 ml) and dichloromethane (20 ml) to effect dichloromethane extraction. The dichloromethane layer was dried over potassium carbonate and concentrated under reduced pressure. The residue was dried under vaccum to obtain white crystals having a melting point of 34-35 °C (683.9 mg, 92.0% yield).
¹H-NMR (CDCl₃) d= 1.01-1.43 (m, 6H), 1.52-1.74 (m, 8H), 2.21-2.29 (m, 1H), 2.22-2.30 (m, 1H), 2.52-2.61 (m, 2H), 3.04-3.10 (m, 2H)
¹³C-NMR (CDCl₃) d=24.63, 26.82, 29.12. 46.81. 61.43

### Example 3: synthesis of N, N'-bis(diphenylphosphino)-(R, R)-2, 2'-bipiperidine

To a toluene solution (40 ml) of (R, R)-2,2'-bipiperidine (683.9 mg, 4.06 mmol) in an ice-water bath and an atmosphere of argon, was added triethylamine (1.19 ml, 8. 53 mmol). Thereafter, chlorodiphenylphosphine (1.53 ml, 8.53 mmol) was added dropwise thereto over 10 minutes and the resultant mixture was stirred at room temperature for 1 hour. After completion of the reaction, the reaction mixture was filtered off and the solvent was evaporated from the filtrate. The resultant residue was dried under vaccum to obtain white amorphous crystals (1.44 g). the amorphous crystals were dissolved in acetone (40 ml) and water was added dropwise to the solution and stirred at 0°C. The precipitated white solid material was filtered out and dried under vaccum. There was obtained white solid material having a melting point of 228- 230 °C (dec. ) (248.8 mg, 11.1% yield).
¹H-NMR (CDCl₃) d=0.51-0.58 (m, 2H), 1.02- 1.09 (m, 2H), 1.32-1.86 (m, 8H), 2.94-3.01 (m, 2H), 3.23-3.33 (m, 2H), 4.09-4.13 (m, 2H), 6.92-7.75 (m, 20H)

### Example 4: synthesis of rhodium-N, N'-bis(diphenylphosphino) - (R, R)-2,2'-bipiperidine complex

To an acetone solution (1.0 ml) of [Rh (1.5-cyclooctadiene) Cl]₂ (105.2 mg, 0.213 mmol) and sodium perchlorate (73.0 mg, 0.596mmol) in an atmosphere of argon, was added N, N'-bis(diphenylphosphino)-(R, R)-2,2'-bipiperidine (240 mg, 0.447 mmol). The resultant mixture was stirred at room temperature for 5 minutes, followed by the addition of dichloromethane (2 ml) and filtered. The filtrate was concentrated under reduced pressure to remove the solvent present therein until its volume became about 1 ml. On standing the residue for 3 days under flow of about 10 ml of argon per minute, wine - red colored crystals precipitated, were filtered out and dried under vaccum at room temperature for 4 hours to obtain orange solid material having a melting point of 165-166 °C (dec.) (157.4 mg, 87.0% yield).

### Example 5: synthesis of N, N'-bis(diphenylphosphino)-(R, R)-2, 2'-bipyrrolidine

To a toluene solution (7 ml) of (R, R)-2, 2'-bipyrrolidine (384.5 mg, 2.48 mmol) in an ice bath and an atmosphere of argon, was added triethylamine (0.64 ml, 4.58 mmol). Thereafter, chlorodiphenylphosphine (0.82 ml, 4.58 mmol) was added dropwise thereto over a period of 10 minutes and the resultant mixture was stirred at room temperature for 2 hours. After completion of the reaction, the reaction mixture was filtered off and the filtrate was concentrated under reduced pressure to remove the solvent. The resultant residue was dried under vaccum to obtain white amorphous crystals (1.44 g). The amorphous crystals were dissolved in acetone (20 ml) by heating to 60 °C and water (4.2 ml) was added dropwise to the solution. Upon stirring at 0°C for 30 minutes, white and a viscous liquid separated out. After filtration, the white and viscous liquid was dried under vaccum to obtain white amorphous material having a melting point of 142-144°C (dec.) (451 mg, 35.8% yield).
¹H-NMR (CDCl₃) d=1.43-1.92 (m, 8H), 2.63-2.74 (m, 2H), 2.95-3.05 (m, 2H), 4.13-4.20 (m, 2H), 7.27-7.40 (m, 20H)

### Example 6: synthesis of rhodium-N,N'-bis(diphenylphosphino) -(R, R)-2, 2'-bipyrrolidine complex

To an acetone solution (2.0 ml) of [Rh (1.5-cyclooctadiene) Cl]₂ (a product of STREM Company, 156 mg, 0. 876 mmol) and sodium perchlorate (107.1 mg, 0.596mmol) in an atmosphere of argon, was added N, N'-bis(diphenylphosphino)-(R, R)-2,2'-bipyrrolidine (350 mg, 0.688 mmol). The resultant mixture was stirred at room temperature for 5 minutes, followed by the addition of dichloromethane (7 ml) and filtered. The filtrate was concentrated under reduced pressure to remove the solvent until its volume became about 2 ml. On standing the residue for 2 hours under flow of about 50 ml of argon per minute, wine-red crystals precipitated, were filtered out and dried under vaccum at room temperature for 24 hours to obtain orange solid material having a melting point of 183-184°C (dec.) (191.9 mg, 71.8% yield).

| Elementary analysis | C | H | N |
|---|---|---|---|
| Calculated for C₄₀H₄₆N₂P₂ClO₆Rh) (%) | 58.4 | 5.7 | 3.4 |
| Found (%) | 56.8 | 5.6 | 3.1 |

The structure was identified by X-ray analysis.

### Example 7: asymmetric hydrogenation of α-acetaminocinnamic acid in the presence of rhodium-N, N'-bis(diphenylphosphino)-(R, R)-2,2'-bipiperidine complex

Bipiperidine type of catalyst (2.54 mg, 0.003 mmol) obtained in Example 4 and a -acetaminocinnamic acid (62.8 mg, 0.3 mmol) were placed in a 50 ml of glass inner tube for autoclave use, and then the freeze-dried and deaerated ethanol (2.5 ml) was added. After evacuating the system, 8 atm. of hydrogen gas was introduced and the mixture was magnetically stirred at room temperature.

After 20 hours, the hydrogen gas was purged out. The reaction solution was concentrated under reduced pressure and the residue was treated with a short silica gel column (eluent; ethyl acetate) to isolate yellowish solid having a melting point of 171-173 °C (60.0 mg, 100% yield). As a result of the HPLC analysis, the optical purity ee was 96.5% (L-form).
¹H-NMR (CDCl₃) d= 1.78 (s, 3H), 2.78-2.88 (m, 1H), 3.01-3.09 (m, 1H), 3.34 (brs. 1H), 4.35-4.45 (m, 1H), 7.16 - 7.31 (m, 5H), 8.16-8.21 (d, 1H)

### Example 8: asymmetric hydrogenation of α-acetaminocinnamic acid in the presence of rhodium-N, N'-bis(diphenylphosphino)-(R, R)-2,2'-bipyrrolidine complex

Bipyrrolidine type of catalyst (1.97 mg, 0.0023 mmol) which was obtained in Example 6 and a -acetaminocinnamic acid (209 mg, 1.0 mmol) were placed in a 50 ml of glass inner tube for autoclave use, and then the freeze-dried and deaerated ethanol (2.5 ml) was added. After evacuating the system, 8 atm. of hydrogen gas was introduced and the mixture was magnetically stirred at room temperature.

After 20 hours, the hydrogen gas was purged out. The reaction solution was concentrated under reduced pressure and the residue was treated with a short silica gel column (eluent; ethyl acetate) to isolate yellowish having a melting point of 171-173°C (206.9 mg, 99% yield). As a result of the HPLC analysis, the optical purity ee was 87.5% (L-form).
¹H-NMR (CDCl₃) d= 1.78 (s, 3H), 2.78-2.88 (m, 1H), 3.01-3.09 (m, 1H), 3.34 (brs. 1H), 4.35-4.45 (m, 1H), 7.16 -7.31 (m, 5H), 8.16-8.21 (d, 1H)

In conclusion, the discussion and examples above indicate that there may be obtained cheaply, in an industrially feasible manner, a novel and optically active diaminophosphine ligand-transition metal complex which is useful as a catalyst for asymmetric reactions including asymmetric reduction and asymmetric hydrosilylation.

## Claims

1. An optically active diaminophosphine ligand-transition metal complex represented by the general formula (I) or (II) 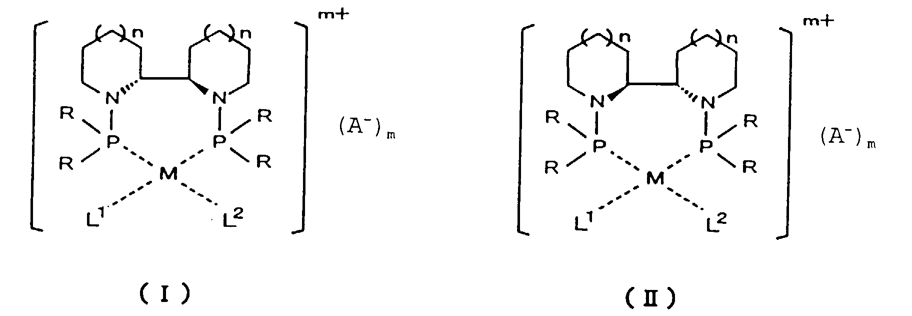 wherein R represents an optionally substituted aryl group or an optionally substituted cycloalkyl group having 3-8 carbon atoms, n represents an integer of 0 or 1, M represents a transition metal, A⁻ represents a counter ion, m represents an integer of 0,1,2,3 or 4, and L¹ and L² represent a ligand independently or in one united body.

2. An optically active diaminophosphine derivative represented by the general formula (III) or (IV) 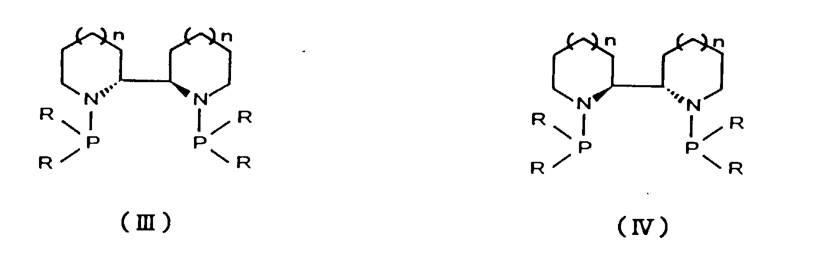 wherein R represents an optionally substituted aryl group or an optionally substituted cycloalkyl group having 3-8 carbon atoms, n represents an integer of 0 or 1.

3. A process for preparing an optically active diaminophosphine derivative as claimed in claim 2 which comprises reactig an optically active compound which may be represented by the general formula (V) or (VI) with a halophosphine which may be represented by the general formula (VII). 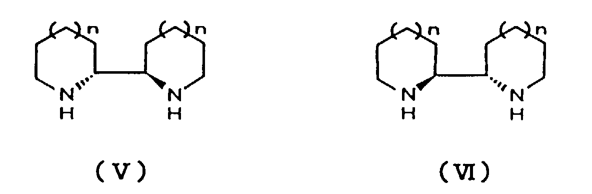 wherein n represents an integer of 0 or 1 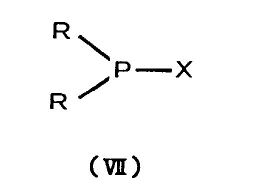 wherein R represents an optionally substituted aryl group or an optionally substituted cycloalkyl group having 3-8 carbon atoms and X represents a halogen atom.

4. A process for preparing an optically active 2, 2'-bipiperidine represented by the following formula (VIII) or (IX) which comprises resolving racemate of (S,S)- and (R,R) -2, 2'-bipiperidine (VIII) and (IX) with an optically active carboxylic acid.

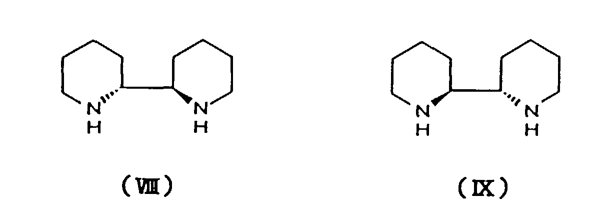

5. A process for preparing an optically active 2, 2'-bipiperidine as claimed in claim 4 wherein said optically active carboxylic acid is an optically active tartaric acid.

6. An asymmetric reaction of an organic unsaturated compound which comprises using as an asymmetric catalyst the optically active diaminophosphine ligand-transition metal complex as claimed in claim 1.

7. A process for preparing an optically active amino acid derivative represented by the general formula (X I ) which comprises subjecting a dehydroamino acid derivative represented by the general formula (X ) to asymmetric reduction in the presence of an optically active diaminophosphine ligand-containing transition metal complex as claimed in claim 1 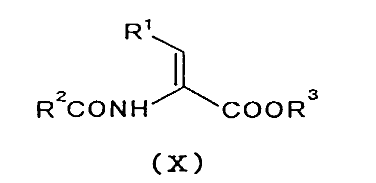 wherein R¹ represents hydrogen atom, an optionally substituted alkyl group, an optionally substituted aryl group or an an optionally substituted aralkyl group, R² represents an optionally substituted lower alkyl group or optionally substituted phenyl group and R³ represents either OR⁴ or NH₂, and R⁴ in OR⁴ represents hydrogen atom, sodium atom, an optionally substituted lower alkyl group or an optionally substituted aryl group. 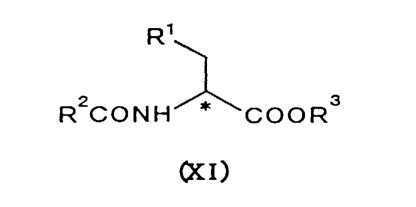 wherein each of R¹, R² and R³ has the same meaning as above.
